# EUROPEAN PATENT APPLICATION

(11) **EP 1 881 337 A1**
(43) Date of publication of application: **23.01.2008**
(21) Application number: 07014171.8
(22) Date of filing: 19.07.2007
(51) Int. Cl.: G01S 1/00

(54) **Positioning device, method of calculating search range, and recording medium**

(30) Priority: 21.07.2006 JP 2006198920
(71) Applicant: Seiko Epson Corporation, Shinjuku-ku Tokyo 163-0811 (JP)
(72) Inventor: Matsumoto, Kazumi, Suwa-shi Nagano-ken 392-8502 (JP)
(74) Representative: HOFFMANN EITLE

(57) **Abstract**

A positioning device which locates a position using satellite signals from a plurality of satellite positioning system (SPS) satellites includes a satellite position calculation section which calculates a satellite position of each SPS satellite in an orbit, a relative position calculation section which calculates a relative position between an initial position P0 of the positioning device and a satellite position Pv of each SPS satellite, a Doppler shift error calculation section which calculates a Doppler shift error which is an error of a Doppler shift of a frequency of each satellite signal based on the relative position, and a frequency range calculation section which calculates a frequency range for receiving each satellite signal based on the Doppler shift error.

## Description

### BACKGROUND OF THE INVENTION

The present invention relates to a positioning device capable of locating a position using a satellite positioning system (SPS), a method of calculating a search range, and a recording medium.

A positioning system has been used in practice which locates the present position of a GPS receiver utilizing an SPS such as a global positioning system (GPS) (e.g. JP-A-2000-131415 (e.g. FIG. 1)).

The GPS receiver receives signals (hereinafter called "satellite signals") from four GPS satellites positioned in the sky, and calculates the distance between each GPS satellite and the GPS receiver (hereinafter called "pseudo-range") based on the difference between the time at which the satellite signal is transmitted from each GPS satellite and the time at which the satellite signal reaches the GPS receiver (hereinafter called "delay time"). The GPS receiver calculates the present position of the GPS receiver using the position of each GPS satellite in the satellite orbit and the pseudo-range.

When the GPS receiver receives the satellite signal, the GPS receiver must determine a specific frequency range (hereinafter called "search range") taking into consideration the Doppler shift due to the relative movement between each GPS satellite and the GPS receiver and a frequency error of a local oscillator of the GPS receiver, and search for the satellite signal within the determined frequency range.

A technology is generally used which determines the search range taking into consideration a change in frequency (drift) of the local oscillator due to a change in temperature.

However, when the Doppler shift error occurs to a large extent, the search range may not be appropriately specified, whereby the satellite signal may not be promptly received. When increasing the search range taking the maximum Doppler shift error into consideration, the search resource (correlator) may not be efficiently used.

### SUMMARY

According to one aspect of the invention, there is provided a positioning device which locates a position using satellite signals from a plurality of satellite positioning system (SPS) satellites, the positioning device comprising:
a satellite position calculation section which calculates a satellite position each of the SPS satellites;
a relative position calculation section which calculates a relative position between a given initial position of the positioning device and the calculated satellite position of each of the SPS satellites;
a Doppler shift error calculation section which calculates a Doppler shift error which is an error of a Doppler shift of a frequency of the satellite signal from each of the SPS satellites based on the calculated relative position;
a frequency range calculation section which calculates a frequency range for receiving the satellite signal from each of the SPS satellites based on the calculated Doppler shift error;
a signal acquisition section which acquires the satellite signal from each of the SPS satellites using the calculated frequency range as a reception frequency search range; and
a positioning section which locates a present position based on the acquired satellite signal.

### BRIEF DESCRIPTION OF THE SEVERAL VIEWS OF THE DRAWING

FIG. 1 is a schematic view showing a terminal and the like according to one embodiment of the invention.
FIG. 2 is a schematic view showing an example of a positioning method.
FIGS. 3A and 3B are views illustrative of a correlation process.
FIGS. 4A and 4B are views illustrative of the correlation process.
FIG. 5 is a schematic view showing the main hardware configuration of the terminal.
FIG. 6 is a schematic view showing the main software configuration of the terminal.
FIGS. 7A and 7B are views illustrative of a process based on an estimated Doppler frequency calculation program.
FIG. 8 is a view illustrative of a process based on a relative position calculation program.
FIG. 9 is a view illustrative of a process based on a Doppler error calculation program.
FIGS. 10A and 10B are views illustrative of a process based on the Doppler error calculation program.
FIGS. 11A and 11B are views illustrative of a process based on a search range calculation program.
FIG. 12 is a schematic flowchart showing an operation example of the terminal.

### DETAILED DESCRIPTION OF THE EMBODIMENT

The invention may allow prompt and efficient acquisition of each SPS satellite corresponding to the Doppler shift error.

According to one embodiment of the invention, there is provided a positioning device which locates a position using satellite signals from a plurality of satellite positioning system (SPS) satellites, the positioning device comprising:
a satellite position calculation section which calculates a satellite position each of the SPS satellites;
a relative position calculation section which calculates a relative position between a given initial position of the positioning device and the calculated satellite position of each of the SPS satellites;
a Doppler shift error calculation section which calculates a Doppler shift error which is an error of a Doppler shift of a frequency of the satellite signal from each of the SPS satellites based on the calculated relative position;
a frequency range calculation section which calculates a frequency range for receiving the satellite signal from each of the SPS satellites based on the calculated Doppler shift error;
a signal acquisition section which acquires the satellite signal from each of the SPS satellites using the calculated frequency range as a reception frequency search range; and
a positioning section which locates a present position based on the acquired satellite signal.

According to this embodiment, since the positioning device includes the Doppler shift error calculation section, the positioning device can calculate the Doppler shift error.

Since the positioning device includes the frequency range calculation section, the positioning device can calculate the frequency range for receiving the satellite signal based on the Doppler shift error.

This allows each SPS satellite to be promptly and efficiently acquired corresponding to the Doppler shift error.

In the positioning device according to this embodiment, the relative position calculation section may calculate an angle of elevation of the satellite position of each of the SPS satellites with respect to the initial position as the relative position.

The Doppler shift error increases as the angle of elevation increases. The angle of elevation differs depending on the SPS satellite.

Therefore, this embodiment allows the positioning device to calculate the Doppler shift error of each of the SPS satellites utilizing the angle of elevation.

In the positioning device according to this embodiment, the Doppler shift error calculation section may calculate the Doppler shift error based on the angle of elevation calculated by the relative position calculation section and an initial position error of the initial position.

The Doppler shift error increases as the initial position error increases.

Therefore, this embodiment allows the positioning device to calculate the Doppler shift error corresponding to the initial position error.

According to another embodiment of the invention, there is provided a method of calculating a search range of a frequency of a satellite signal when a positioning device which locates a position using satellite signals from a plurality of satellite positioning system (SPS) satellites acquires the satellite signal, the method comprising:
calculating a satellite position each of the SPS satellites;
calculating a line-of-sight vector indicating a movement state of each of the SPS satellites with respect to the positioning device;
calculating a Doppler shift of the satellite signal from each of the SPS satellites based on the calculated line-of-sight vector;
calculating a relative position between a given initial position of the positioning device and the calculated satellite position of each of the SPS satellites;
calculating a Doppler shift error which is an error of the Doppler shift of the frequency of the satellite signal from each of the SPS satellites based on the calculated relative position; and
calculating a search range of the frequency of the satellite signal when acquiring the satellite signal from each of the SPS satellites based on the calculated Doppler shift error.

According to this method, since the frequency search range of the satellite signal can be calculated based on the Doppler shift error calculated for each of the SPS satellites, each SPS satellite can be promptly and efficiently acquired corresponding to the Doppler shift error.

According to a further embodiment of the invention, there is provided a computer-readable recording medium having recorded thereon a program for causing a computer which locates a position using satellite signals from a plurality of satellite positioning system (SPS) satellites to calculate a search range of a frequency of the satellite signal when acquiring the satellite signal, the program causing the computer to execute:
calculating a satellite position each of the SPS satellites;
calculating a line-of-sight vector indicating a movement state of each of the SPS satellites with respect to the computer;
calculating a Doppler shift of the satellite signal from each of the SPS satellites based on the calculated line-of-sight vector;
calculating a relative position between a given initial position of the computer and the calculated satellite position of each of the SPS satellites;
calculating a Doppler shift error which is an error of the Doppler shift of the frequency of the satellite signal from each of the SPS satellites based on the calculated relative position; and
calculating a search range of the frequency of the satellite signal when acquiring the satellite signal from each of the SPS satellites based on the calculated Doppler shift error.

Preferred embodiments of the invention are described below in detail with reference to the drawings.

The following embodiments illustrate specific preferred embodiments of the invention and are provided with various technologically preferred limitations. Note that the scope of the invention is not limited to the following embodiments unless there is a description limiting the invention.

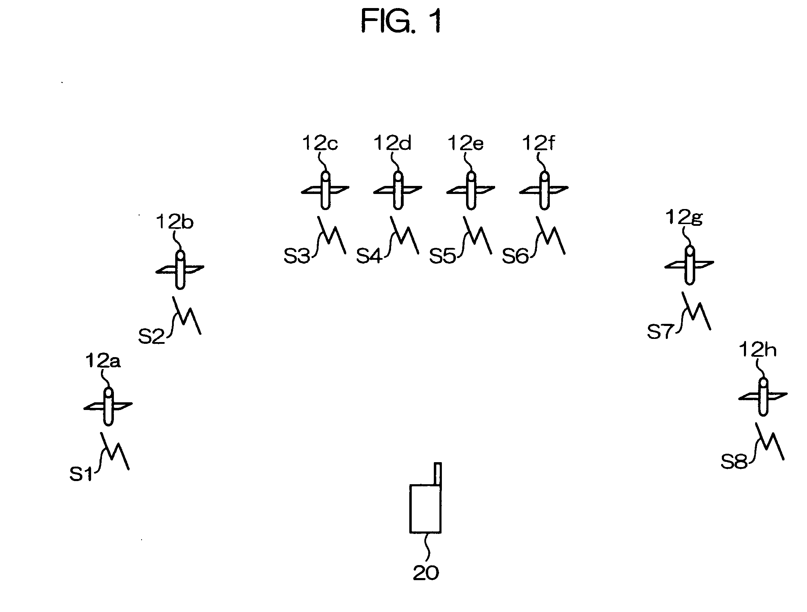

FIG. 1 is a schematic view showing a terminal 20 and the like according to one embodiment of the invention.

As shown in FIG. 1, the terminal 20 can receive signals S1 to S8 from GPS satellites 12a to 12h.

The GPS satellite may be simply called "satellite".

The GPS satellites 12a and the like exemplify an SPS satellite. The signals S 1 and the like exemplify a satellite signal. The signal S 1 includes a clear and acquisition or coarse/access (C/A) code. The C/A code is one type of pseudorandom noise code (hereinafter called "PN code"). The C/A code is a signal having a bit rate of 1.023 Mbps and a bit length of 1023 bits (=1 msec). The C/A code includes 1023 chips. The terminal 20 locates the present position using the C/A code.

The terminal 20 is a portable telephone, a personal handy-phone system (PHS), a personal digital assistance (PDA), or the like. Note that the terminal 20 is not limited thereto.

The SPS is not limited to the GPS. The SPS may be the Galileo, the quasi-zenith satellite system, or the like.

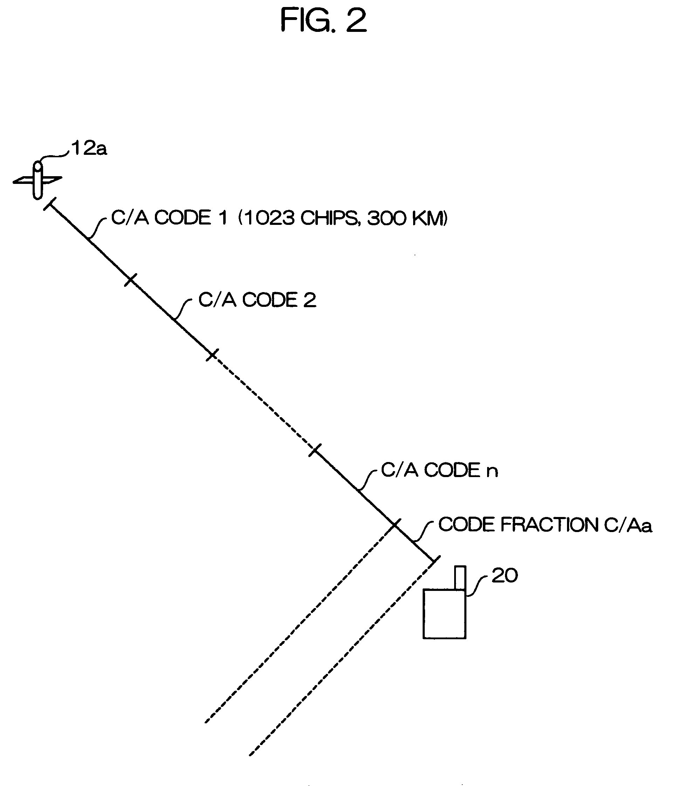

FIG. 2 is a schematic view showing an example of a positioning method.

As shown in FIG. 2, it may be considered that the C/A codes continuously line up between the GPS satellite 12a and the terminal 20, for example. Since the distance between the GPS satellite 12a and the terminal 20 is not necessarily a multiple of the length (300 kilometers (km)) of the C/A code, a code fraction C/Aa may exist. Specifically, a portion of a multiple of the C/A code and a fraction portion exist between the GPS satellite 12a and the terminal 20. The total length of the portion of a multiple of the C/A code and the fraction portion is the pseudo-range. The terminal 20 locates the position using the pseudo-ranges for three or more GPS satellites 12a and the like.

In this specification, the fraction portion C/Aa of the C/A code is called "code phase". The code phase may be indicated by the number of the chip included in the 1023 chips of the C/A code, or may be converted into distance, for example. When calculating the pseudo-range, the code phase is converted into distance.

The position of the GPS satellite 12a in the orbit can be calculated using an ephemeris. The ephemeris is information indicating the precise orbit of the GPS satellite 12a. The portion of a multiple of the C/A code can be specified by calculating the distance between the position of the GPS satellite 12a in the orbit and an initial position Q0 described later, for example. Since the length of the C/A code is 300 kilometers (km), the position error of the initial position Q0 must be 150 kilometers (km) or less.

The terminal 20 performs a correlation process while changing the code phase and the frequency. The correlation process includes a coherent process and an incoherent process described later. The phase having the maximum correlation cumulative value is the code fraction C/Aa.

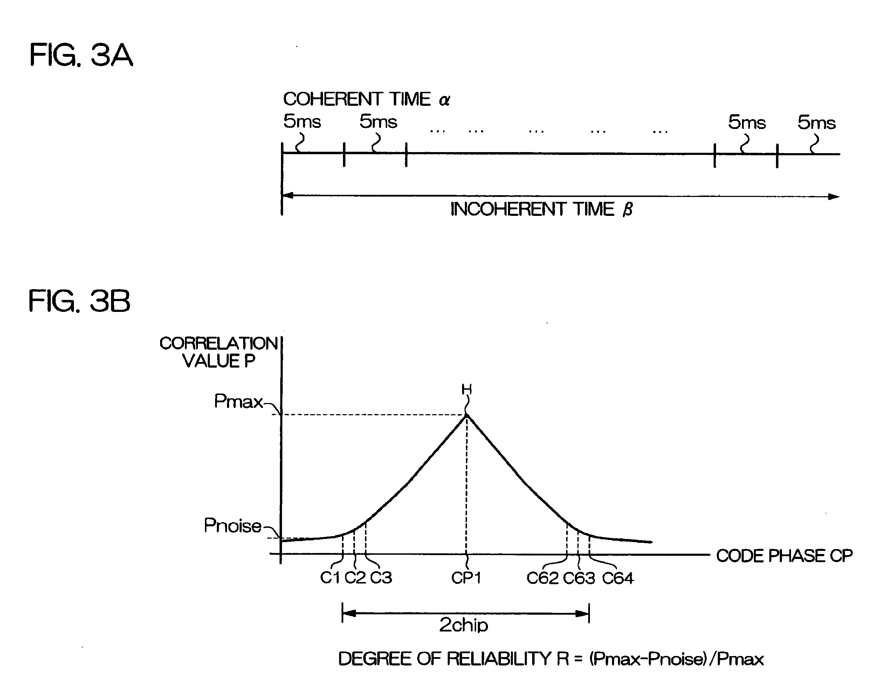

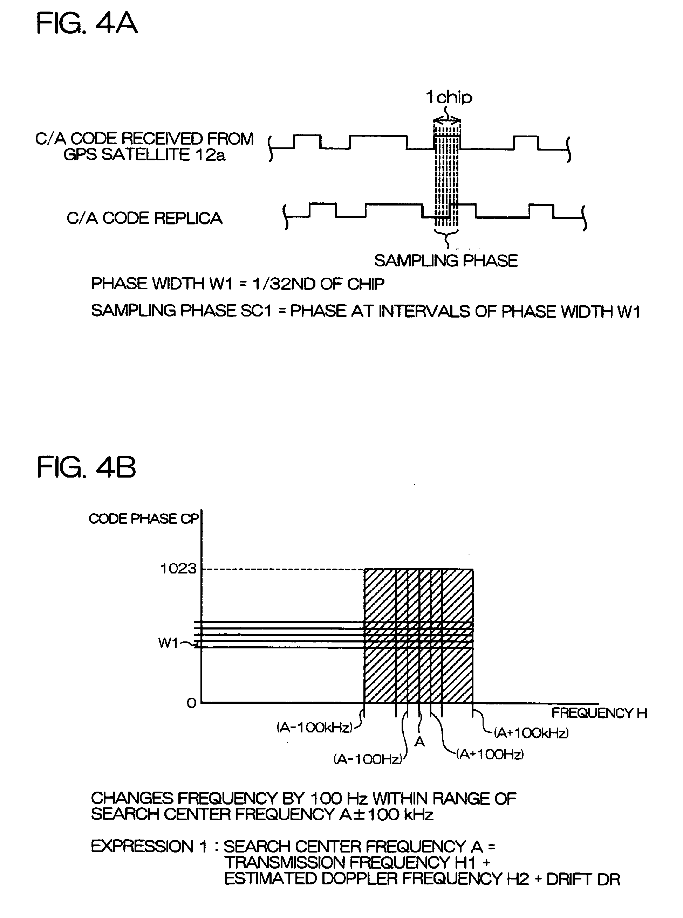

FIGS. 3 and 4 are views illustrative of the correlation process.

The coherent process is a process of correlating the C/A code received by the terminal 20 with a C/A code replica. The C/A code replica is a code generated by the terminal 20.

For example, when the coherent time is 5 msec, as shown in FIG. 3A, the correlation value between the C/A code synchronously accumulated over 5 msec and the C/A code replica is calculated. The correlated phase (code phase) and the correlation value are output as a result of the coherent process.

The incoherent process is a process of calculating the correlation cumulative value (incoherent value) by accumulating the correlation values as the coherent results.

The code phase output by the coherent process and the correlation cumulative value are output as a result of the correlation process.

As shown in FIG. 3B, a code phase CP1 corresponding to the maximum value Pmax of the correlation value P is the code phase fraction C/Aa (see FIG. 2).

As shown in FIG. 4A, the terminal 20 equally divides one chip of the C/A code and performs the correlation process, for example. One chip of the C/A code is equally divided into 32 sections, for example. Specifically, the terminal 20 performs the correlation process at intervals of a phase width of 1/32nd of the chip (phase width W1).

As shown in FIG. 4B, the terminal 20 searches for the first chip to the 1023rd chip of the C/A code, for example.

In this case, the terminal 20 searches for the signals S1 and the like around a search center frequency A within a frequency range with a specific width. For example, the terminal 20 searches for the signals S 1 and the like at a frequency step of 100 Hz within the frequency range from (A-100) kHz to (A+100) kHz.

A GPS receiver generally calculates the search center frequency A by adding a Doppler shift (estimated Doppler frequency) H2 to a transmission frequency H1 of the GPS satellites 12a and the like and adding a drift DR to the resulting value. The transmission frequency H1 of the GPS satellites 12a and the like is known (e.g. 1575.42 MHz). The term "drift DR" refers to a change in oscillation frequency of a reference oscillator of the GPS receiver due to a change in temperature.

The Doppler shift occurs due to the relative movement of each of the GPS satellites 12a and the like and the GPS receiver. The GPS receiver calculates the line-of-sight velocity (velocity in the direction of the terminal 20) of each of the GPS satellites 12a and the like at the present time using the ephemeris. The GPS receiver calculates the estimated Doppler frequency H2 based on the line-of-sight velocity.

The GPS receiver calculates the search center frequency A of each of the GPS satellites 12a and the like.

However, when the accuracy of the estimated Doppler frequency H2 is low, the signals S1 and the like may not be promptly acquired. Therefore, the code phase may not be promptly calculated.

In particular, it is necessary to fix the frequency and increase the accumulation time (incoherent time) under a weak electric field of -160 dBm to -139 dBm, for example. However, when the accuracy of the search range is low, there may be a case where the signals S1 and the like cannot be acquired by searching for the signals S1 and the like within a very narrow frequency range, or the period of time required to acquire the signal S 1 is increased when the frequency range is wide to a large extent.

The drift of the reference oscillator (e.g. temperature compensated crystal oscillator (TCXO)) of the GPS receiver is generally 2 ppm. However, the drift of the reference oscillator is reduced to 0.5 ppm by frequency correction utilizing a communication radio wave of a portable telephone, for example. Therefore, the accuracy of the Doppler frequency is important for promptly and efficiently acquiring the signals S 1 and the like rather than the effects of the drift.

The terminal 20 can calculate the error of the estimated Doppler frequency H2 and promptly and efficiently acquire the signals S 1 and the like corresponding to the calculated error.

### (Main hardware configuration of terminal 20)

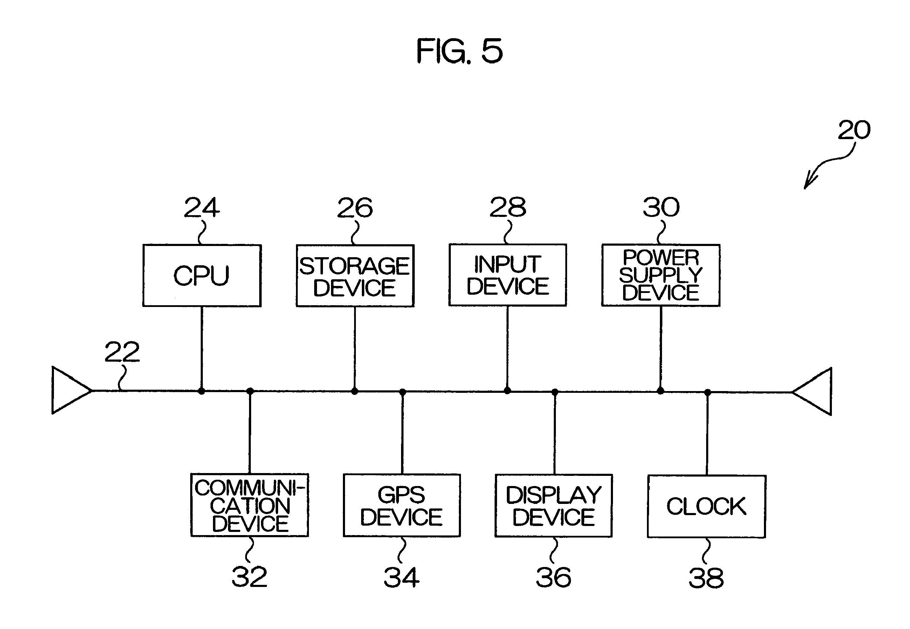

FIG. 5 is a schematic view showing the main hardware configuration of the terminal 20.

As shown in FIG. 5, the terminal 20 includes a computer which includes a bus 22.

A central processing unit (CPU) 24 and a storage device 26 are connected with the bus 22. The storage device 26 is a random access memory (RAM), a read only memory (ROM), or the like.

An input device 28 for receiving various types of information and instructions, a power supply device 30, a communication device 32 for transmitting and receiving communication signals, a GPS device 34 for receiving the signals S 1 and the like from the GPS satellites 12a and the like, and a display device 36 for displaying various types of information are also connected with the bus 22.

A clock 38 is also connected with the bus 22.

### (Main software configuration of terminal 20)

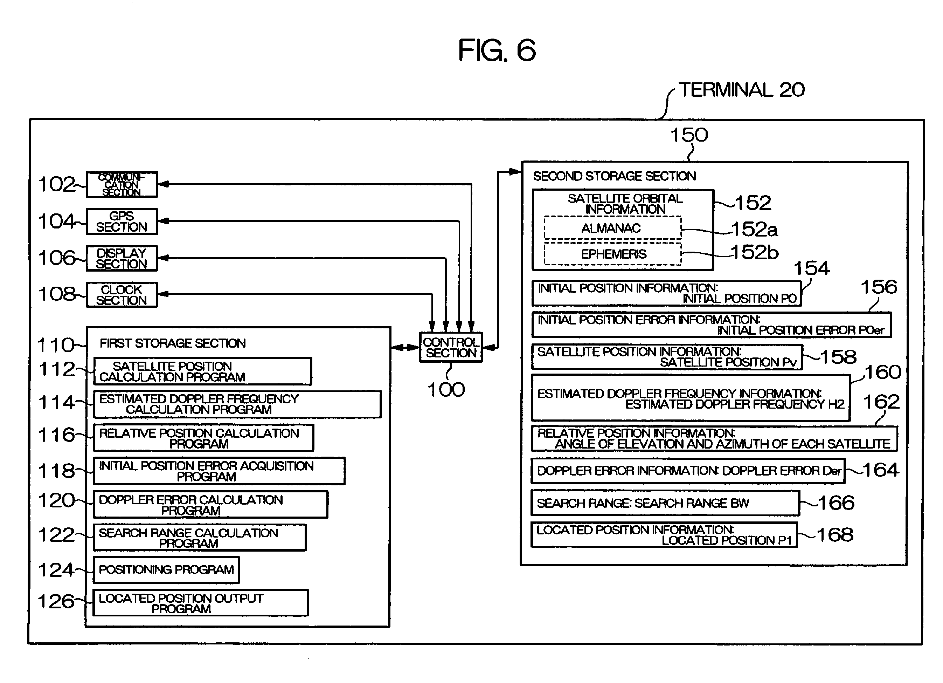

FIG. 6 is a schematic view showing the main software configuration of the terminal 20.

As shown in FIG. 6, the terminal 20 includes a control section 100 which controls each section, a communication section 102 corresponding to the communication device 32 shown in FIG. 5, a GPS section 104 corresponding to the terminal GPS device 34, a display section 106 corresponding to the display device 36, a clock section 108 corresponding to the clock 38, and the like.

The terminal 20 includes a first storage section 110 which stores various programs, and a second storage section 150 which stores various types of information.

As shown in FIG. 6, the terminal 20 stores satellite orbital information 152 in the second storage section 150. The satellite orbital information 152 includes an almanac 152a indicating the approximate orbits of all of the GPS satellites 12a and the like, and an ephemeris 152b indicating the precise orbit of each of the GPS satellites 12a and the like. The terminal 20 acquires the almanac 152a and the ephemeris 152b by receiving the signals S1 and the like from the GPS satellites 12a and the like and decoding the received signals.

The terminal 20 uses the satellite orbital information 152 for positioning based on the signals S 1 and the like.

As shown in FIG 6, the terminal 20 stores initial position information 154 in the second storage section 150. The initial position information 154 is information indicating the initial position P0. The initial position P0 is the located position during the preceding positioning, for example.

As shown in FIG. 6, the terminal 20 stores initial position error information 156 in the second storage section 150. The initial position error information 156 is information indicating an error (hereinafter called "initial position error") POer of the initial position P0. The initial position error POer is specified by the reception state of the signals S1 and the like and the position dilution of precision (PDOP) when calculating the initial position P0. For example, when the signal strength of the signals S 1 and the like is high and the PDOP is small, the initial position error P0er is 5 meters (m). On the other hand, when the terminal 20 receives the signals S1 and the like indoors and the signal strength is low, the initial position error P0er is 30 meters (m).

As shown in FIG. 6, the terminal 20 stores a satellite position calculation program 112 in the first storage section 110. The satellite position calculation program 112 is a program for causing the control section 100 to calculate a satellite position Pv of each of the observable GPS satellites 12a and the like in the orbit. The satellite position calculation program 112 and the control section 100 exemplify a satellite position calculation section.

In more detail, the control section 100 determines the GPS satellites 12a and the like which can be observed at the present time with respect to the initial position P0 based on the almanac 152a. The control section 100 then calculates the position of each of the GPS satellites 12a and the like at the present time based on the ephemeris 152b.

The satellite position Pv is calculated for each of the GPS satellites 12a and the like (e.g. satellite position Pva of the GPS satellite 12a in the orbit and satellite position Pvb of the GPS satellite 12b in the orbit).

The control section 100 stores satellite position information 158 indicating the calculated satellite position Pv in the second storage section 150.

As shown in FIG. 6, the terminal 20 stores an estimated Doppler frequency calculation program 114 in the first storage section 110. The estimated Doppler frequency calculation program 114 is a program for causing the control section 100 to calculate an estimated Doppler frequency H2 (i.e. Doppler shift of the carrier frequency of the signal S1) of each of the observable GPS satellites 12a and the like. The estimated Doppler frequency H2 exemplifies a Doppler shift.

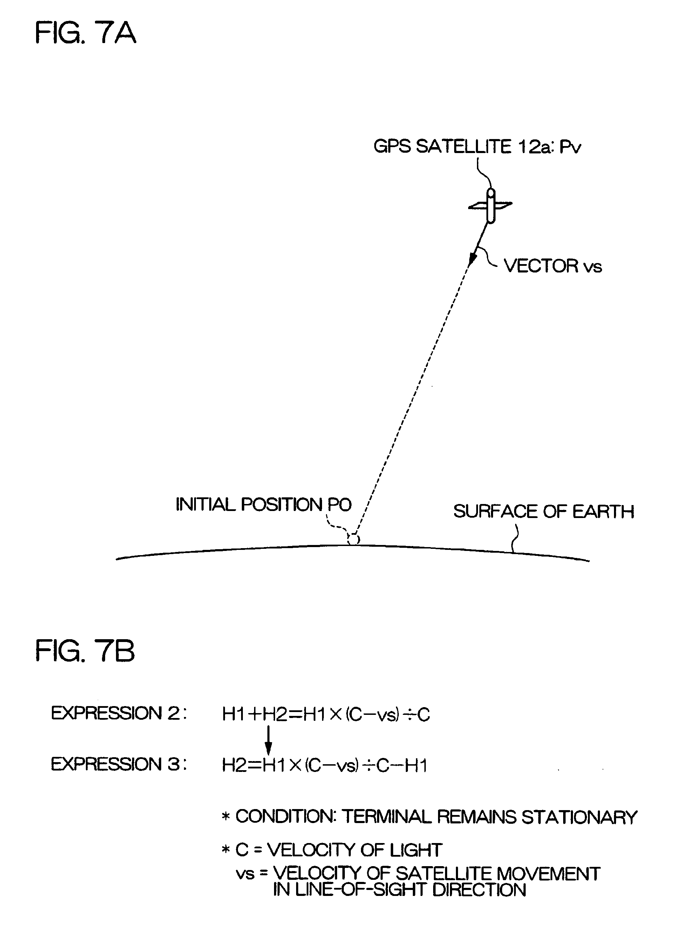

FIG. 7 is a view illustrative of the process based on the estimated Doppler frequency calculation program 114.

As shown in FIG. 7A, the control section 100 calculates a vector vs indicating the movement state of each of the GPS satellites 12a and the like at the present time with respect to the initial position P0 referring to the ephemeris 152b.

As shown in FIG. 7B, since the frequency obtained by adding the transmission frequency H1 to the estimated Doppler frequency H2 is calculated by the expression 2 using the vector vs, the estimated Doppler frequency H2 is calculated by the expression 3. In this embodiment, the terminal 20 remains stationary for convenience of description.

The control section 100 stores estimated Doppler frequency information 160 indicating the calculated estimated Doppler frequency H2 in the second storage section 150.

As shown in FIG. 6, the terminal 20 stores a relative position calculation program 116 in the first storage section 110. The relative position calculation program 116 is a program for causing the control section 100 to calculate the relative position between the initial position P0 and the satellite position Pv of each of the GPS satellites 12a and the like. The relative position calculation program 116 and the control section 100 exemplify a relative position calculation section.

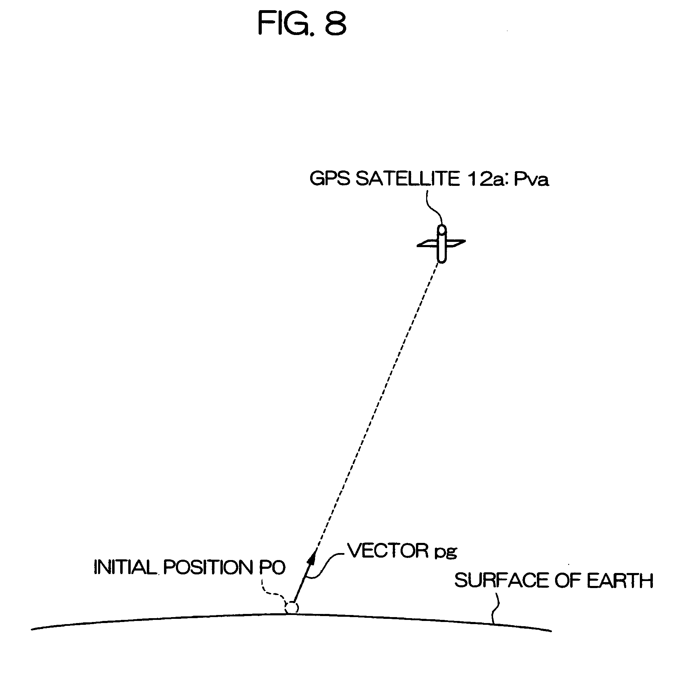

FIG. 8 is a view illustrative of the process based on the relative position calculation program 116.

Specifically, the control section 100 calculates a vector pg from the initial position P0 to the satellite position Pva of the GPS satellite 12a, for example.

The control section 100 calculates the angle of elevation and the azimuth of the GPS satellite 12a from the direction on the three-dimensional coordinates indicated by the vector pg.

The control section 100 calculates the angle of elevation and the azimuth of each of the GPS satellites 12a and the like.

The control section 100 stores relative position information 162 indicating the calculated angle of elevation and azimuth in the second storage section 150. The angle of elevation and azimuth exemplify a relative position.

As shown in FIG. 6, the terminal 20 stores an initial position error acquisition program 118 in the first storage section 110. The initial position error acquisition program 118 is a program for causing the control section 100 to read the initial position error information 156 stored in the second storage section 150.

As shown in FIG. 6, the terminal 20 stores a Doppler error calculation program 120 in the first storage section 110. The Doppler error calculation program 120 is a program for causing the control section 100 to calculate a Doppler error Der which is an error of the estimated Doppler frequency H2. The Doppler error Der exemplifies a Doppler shift error. The Doppler error calculation program 120 and the control section 100 exemplify a Doppler shift error calculation section.

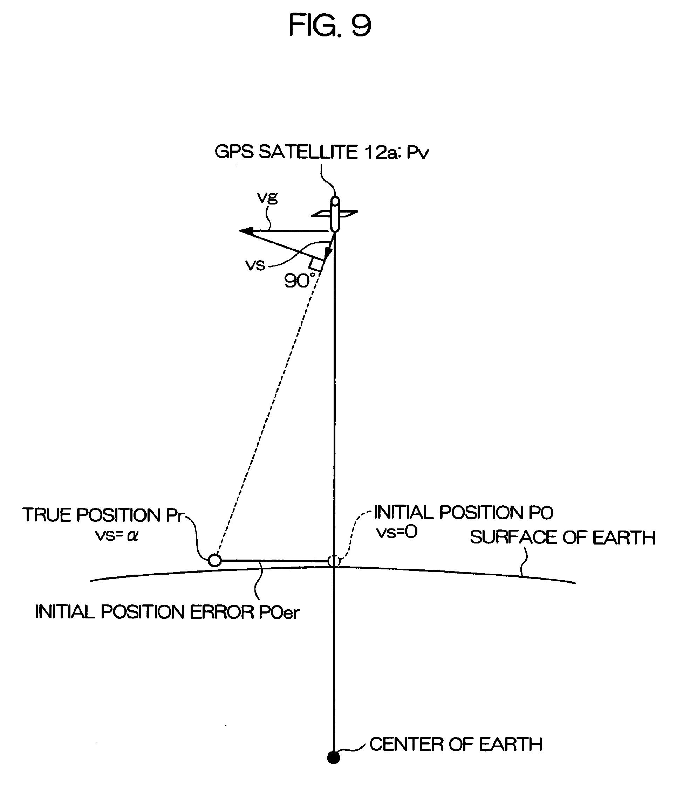

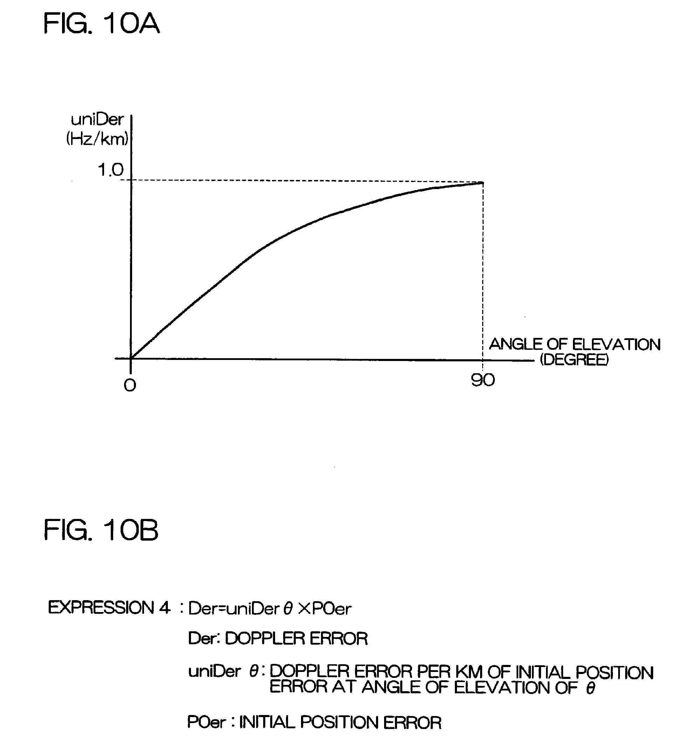

FIGS. 9 and 10 are views illustrative of the process based on the Doppler error calculation program 120.

As shown in FIG. 9, even if the line-of-sight vector vs is zero with respect to the initial position P0, the line-of-sight vector vs may not be zero at the true position Pr. Specifically, the line-of-sight vector vs at the initial position P0 may differ from the line-of-sight vector vs at the true position Pr.

This is because the initial position P0 differs from the true position Pr. Specifically, the initial position error P0er exists. Since the estimated Doppler frequency H2 is calculated based on the line-of-sight vector vs with respect to the initial position P0, the estimated Doppler frequency H2 has an error due to the initial position error P0er.

As shown in FIG. 10A, a Doppler error uniDer per kilometer (km) (unit length of the initial position error P0er) is specified based on the angle of elevation. The Doppler error uniDer has the largest value when the angle of elevation is 90 degrees. For example, the Doppler error uniDer is 1.0 Hz per kilometer (Hz/km) when the angle of elevation is 90 degrees. The Doppler error uniDer has the smallest value (0 Hz per kilometer (Hz/km)) when the angle of elevation is 0 degree.

The graph shown in FIG. 10A is created on the assumption that the orbit of a specific satellite passes over the terminal 20. Note that the Doppler error uniDer increases as the angle of elevation becomes closer to 90 degrees, even if the orbit of a specific satellite does not pass over the terminal 20. Therefore, a similar graph can be created although the values differ from those shown in FIG. 10A.

As shown in FIG. 10B, the control section 100 calculates the Doppler error Der using the expression 4 which multiplies the Doppler error uniDerθ at an angle of elevation of θ by the initial position error P0er.

For example, when the angle of elevation θ is 90 degrees and the initial position error P0er is 100 km, the Doppler error Der is 100 Hz.

The control section 100 stores Doppler error information 164 indicating the calculated Doppler error Der in the second storage section 150.

The control section 100 calculates the Doppler error Der of each of the GPS satellites 12a and the like. For example, the control section 100 respectively calculates the Doppler error Der of the GPS satellite 12a and the Doppler error Der of the GPS satellite 12b. Since the angle of elevation θ differs between the GPS satellites 12a and the like, the Doppler error Der also differs between the GPS satellites 12a and the like. Specifically, a satellite having a larger angle of elevation θ with respect to the initial position P0 has a larger Doppler error Der, and a satellite having a smaller angle of elevation θ has a smaller Doppler error Der.

As shown in FIG. 6, the terminal 20 stores a search range calculation program 122 in the first storage section 110. The search range calculation program 122 is a program for causing the control section 100 to calculate a search range BW which is a frequency range for receiving the signals S1 and the like from the GPS satellites 12a and the like. The search range BW exemplifies a frequency range. The search range calculation program 122 and the control section 100 exemplify a frequency range calculation section.

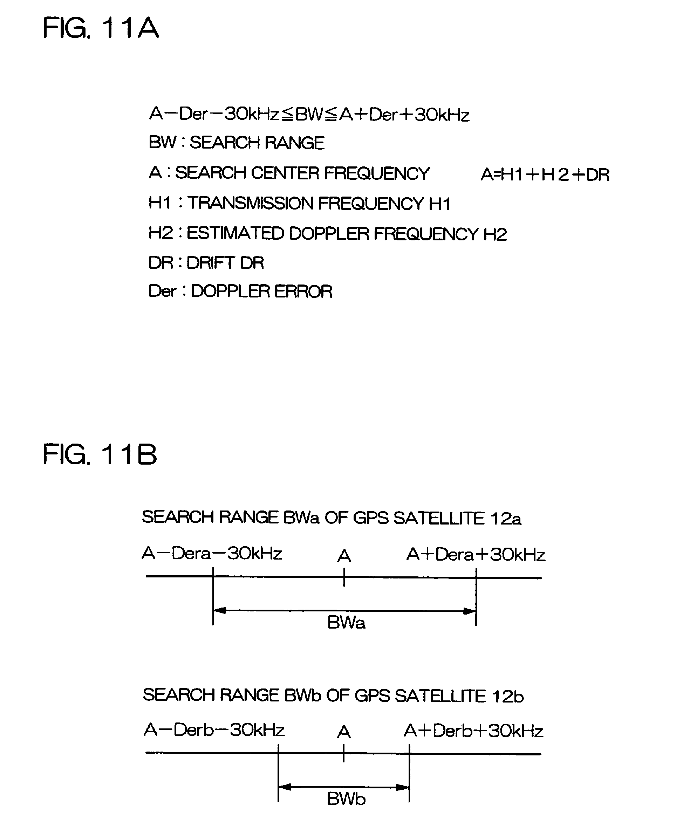

FIG. 11 is a view illustrative of the process based on the search range calculation program 122.

As shown in FIG. 11A, a frequency obtained by subtracting 30 Hz and the Doppler error Der which differs between the GPS satellites 12a and the like from the frequency (search center frequency A) obtained by adding the transmission frequency H1, the estimated Doppler frequency H2, and the drift DR is set to be the frequency lower limit. A frequency obtained by adding 30 Hz and the Doppler error Der which differs between the GPS satellites 12a and the like to the search center frequency A is set to be the frequency upper limit.

The control section 100 uses the range specified by the frequency lower limit and the frequency upper limit as the search range BW.

The control section 100 calculates the search range BW of each of the GPS satellites 12a and the like. For example, the control section 100 respectively calculates the search range BW of the GPS satellite 12a and the search range BW of the GPS satellite 12b.

Since the Doppler error Der differs between the GPS satellites 12a and the like, as described above, the frequency range indicated by the search range BW differs between the GPS satellites 12a and the like, as shown in FIG. 11B.

The control section 100 stores search range information 166 indicating the calculated search range BW in the second storage section 150.

As shown in FIG. 6, the terminal 20 stores a positioning program 124 in the first storage section 110. The positioning program 124 is a program for causing the control section 100 to calculate the located position P1 by searching for the signal within the search range BW of each of the GPS satellites 12a and the like to acquire each of the GPS satellites 12a and the like, tracking each of the GPS satellites 12a and the like, and performing the correlation process.

The control section 100 stores located position information 168 indicating the located position P1 in the second storage section 150.

As shown in FIG. 6, the terminal 20 stores a located position output program 126 in the first storage section 110. The located position output program 126 is a program for causing the control section 100 to output the located position P1 to the display device 36.

The terminal 20 is configured as described above.

As described above, the terminal 20 can calculate the Doppler error Der.

The terminal 20 can calculate the search range BW for receiving each of the signals S 1 and the like based on the Doppler error Der. In order to reliably acquire the signals S1 and the like without taking the Doppler error Der into consideration, it is necessary to specify 100 kHz as the undeterminable range taking into consideration the maximum error of the reception frequency due to various factors, and uniformly set the range of 100 kHz plus and minus the search center frequency to be the search range (hereinafter called "uniformly specified range"). In the terminal 20 according to this embodiment, since the Doppler error Der in the uncertain range of the reception frequency has been determined, the range uniformly specified as the undeterminable range can be reduced to 30 kHz, which is narrower than the maximum error, and the search range BW can be set corresponding to the Doppler error Der of each satellite. Therefore, since the search range BW becomes narrower than the maximum error corresponding to the angle of elevation, the signals S 1 and the like can be promptly acquired in comparison with the case of using the uniformly specified range as the search range.

Since the search range BW differs between the satellites, the search resource (correlator) of the terminal 20 can be allocated to a satellite with a narrow search range BW to a less extent, and can be allocated to a satellite with a broad search range BW to a greater extent. Specifically, the search resource can be allocated corresponding to the search range BW. This enables the search resource to be efficiently utilized.

As a result, each SPS satellite can be promptly and efficiently acquired corresponding to the Doppler shift error.

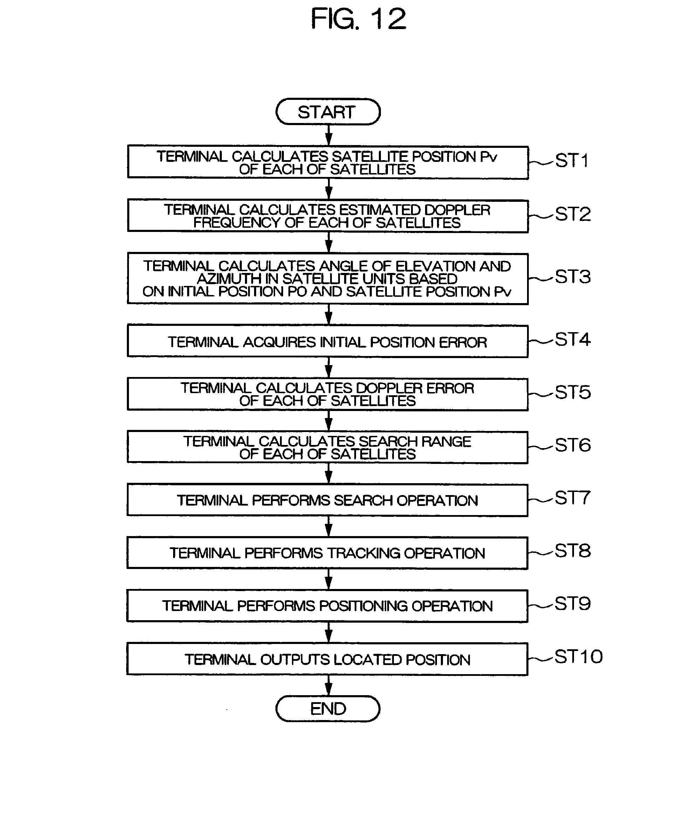

The configuration of the terminal 20 according to this embodiment has been described above. An operation example of the terminal 20 is described below mainly using FIG. 12.

FIG. 12 is a schematic flowchart showing an operation example of the terminal 20 according to this embodiment.

The terminal 20 calculates the satellite position Pv of each of the observable GPS satellites 12a and the like (step ST1 in FIG. 12). The step ST1 exemplifies a satellite position calculation step.

The terminal 20 calculates the estimated Doppler frequency H2 of each of the GPS satellites 12a and the like (step ST2). Specifically, the terminal 20 calculates the line-of-sight vector vs (see FIG. 7A), and calculates the estimated Doppler frequency H2 based on the transmission frequency H1 and the line-of-sight vector vs. The step ST2 exemplifies a line-of-sight vector calculation step, and also exemplifies a Doppler shift calculation step.

The terminal 20 calculates the angle of elevation and the azimuth of each satellite based on the initial position P0 and each satellite position Pv (step ST3). The step ST3 exemplifies a relative position calculation step.

The terminal 20 acquires the initial position error POer (step ST4).

The terminal 20 calculates the Doppler error Der of each of the GPS satellites 12a and the like (step ST5). The step ST5 exemplifies a Doppler shift error calculation step.

The terminal 20 calculates the search range BW of each of the GPS satellites 12a and the like (step ST6). The step ST6 exemplifies a frequency range calculation step.

The terminal 20 performs the search operation (step ST7), performs the tracking operation (step ST8), and performs the positioning operation (step ST9).

The terminal 20 then outputs the located position P0 (step ST10).

The above steps allow prompt and efficient acquisition of each satellite corresponding to the Doppler shift error.

### (Program, computer-readable recording medium, and the like)

A program for controlling a positioning device may be provided which causes a computer to execute the satellite position calculation step, the line-of-sight vector calculation step, the Doppler shift calculation step, the relative position calculation step, the Doppler shift error calculation step, the frequency range calculation step, and the like of the above-described operation example.

A computer-readable recording medium having such a program for controlling a positioning device recorded thereon and the like may also be provided.

A program storage medium used to install the program for controlling a positioning device and the like in a computer to allow the program and the like to be executable by the computer may be implemented by a packaging medium such as a flexible disk such as a floppy disk (registered trademark), a compact disc read only memory (CD-ROM), a compact disc-recordable (CD-R), a compact disc-rewritable (CD-RW), or a digital versatile disc (DVD), a semiconductor memory, a magnetic disk, or a magnetooptical disk in which the program is stored temporarily or permanently, or the like.

The invention is not limited to the above embodiments.

Although only some embodiments of the invention have been described above in detail, those skilled in the art would readily appreciate that many modifications are possible in the embodiments without materially departing from the novel teachings and advantages of the invention. Accordingly, such modifications are intended to be included within the scope of the invention.

## Claims

1. A positioning device which locates a position using satellite signals from a plurality of satellite positioning system (SPS) satellites, the positioning device comprising:
a satellite position calculation section which calculates a satellite position each of the SPS satellites;
a relative position calculation section which calculates a relative position between a given initial position of the positioning device and the calculated satellite position of each of the SPS satellites;
a Doppler shift error calculation section which calculates a Doppler shift error which is an error of a Doppler shift of a frequency of the satellite signal from each of the SPS satellites based on the calculated relative position;
a frequency range calculation section which calculates a frequency range for receiving the satellite signal from each of the SPS satellites based on the calculated Doppler shift error;
a signal acquisition section which acquires the satellite signal from each of the SPS satellites using the calculated frequency range as a reception frequency search range; and
a positioning section which locates a present position based on the acquired satellite signal.

2. The positioning device as defined in claim 1, wherein the relative position calculation section calculates an angle of elevation of the satellite position of each of the SPS satellites with respect to the initial position as the relative position.

3. The positioning device as defined in claim 2, wherein the Doppler shift error calculation section calculates the Doppler shift error based on the angle of elevation calculated by the relative position calculation section and an initial position error of the initial position.

4. A method of calculating a search range of a frequency of a satellite signal when a positioning device which locates a position using satellite signals from a plurality of satellite positioning system (SPS) satellites acquires the satellite signal, the method comprising:
calculating a satellite position each of the SPS satellites;
calculating a line-of-sight vector indicating a movement state of each of the SPS satellites with respect to the positioning device;
calculating a Doppler shift of the satellite signal from each of the SPS satellites based on the calculated line-of-sight vector;
calculating a relative position between a given initial position of the positioning device and the calculated satellite position of each of the SPS satellites;
calculating a Doppler shift error which is an error of the Doppler shift of the frequency of the satellite signal from each of the SPS satellites based on the calculated relative position; and
calculating a search range of the frequency of the satellite signal when acquiring the satellite signal from each of the SPS satellites based on the calculated Doppler shift error.

5. A computer-readable recording medium having recorded thereon a program for causing a computer which locates a position using satellite signals from a plurality of satellite positioning system (SPS) satellites to calculate a search range of a frequency of the satellite signal when acquiring the satellite signal, the program causing the computer to execute:
calculating a satellite position each of the SPS satellites;
calculating a line-of-sight vector indicating a movement state of each of the SPS satellites with respect to the computer;
calculating a Doppler shift of the satellite signal from each of the SPS satellites based on the calculated line-of-sight vector;
calculating a relative position between a given initial position of the computer and the calculated satellite position of each of the SPS satellites;
calculating a Doppler shift error which is an error of the Doppler shift of the frequency of the satellite signal from each of the SPS satellites based on the calculated relative position; and
calculating a search range of the frequency of the satellite signal when acquiring the satellite signal from each of the SPS satellites based on the calculated Doppler shift error.
